Europäisches Patentamt

European Patent Office

Office européen des brevets

(19)

(11) Publication number: **0 201 151**
A2

(12)

# EUROPEAN PATENT APPLICATION

(21) Application number: **86300085.7**

(22) Date of filing: **08.01.86**

(51) Int. Cl.⁴: **C 23 G 1/10,** C 23 G 5/032

(30) Priority: **10.05.85 US 732108**

(43) Date of publication of application: **12.11.86**
**Bulletin 86/46**

(84) Designated Contracting States: **AT CH DE FR GB LI LU NL SE**

(71) Applicant: **KENCO TECHNOLOGY, INC.,**
**925 McFarland- 400 Boulevard Drive, Alpharetta**
**Georgia 30201 (US)**

(72) Inventor: **Nabhani, Abdolrahman, 5507 Roberts Drive,**
**Dunwoody, GA 30338 (US)**

(74) Representative: **Spencer, Graham Easdale et al, A.A.**
**Thornton & CO Northumberland House 303-306, High**
**Holborn, London WC1V 7LE (GB)**

(54) Precleaner compositions, activators therefor, and their use in soldering.

(57) A precleaner composition comprises:
(a) a carboxyl- or carboxylamine-substituted pyridine,
(b) a polyprotic, acid,
(c) a surfactant, and
(d) a solvent carrier.

- 1 -

## Precleaner compositions, activators therefor, and their use in soldering

This invention is concerned with precleaner compositions, activators for precleaner compositions, and their use in soldering metal parts.

During the manufacture of electronic components, including printed wire assemblies and boards and especially integrated circuits, the components are subjected to elevated temperatures which accelerate the formation of oxides on the surface of the metal leads. These oxides and other contaminants must be removed from the leads before the leads can be soldered. Typically, integrated circuit leads are precleaned, fluxed, and then tinned with solder so that the leads are protected against further oxidation and can be easily soldered or reflowed later.

Generally the formulations of both precleaners and soldering fluxes include one or more active materials, a surfactant, and a solvent carrier, the active materials being ingredients which directly react with the oxides and contaminants on the metal to remove such oxides and contaminants. The surfactant is used to ensure that the surface tension of the precleaner or flux is such that it will easily wet the oxides and contaminants so that the active materials are in intimate contact with the oxides and contaminants, thereby enhancing the chemical action of the active materials. The surfactants conventionally include any of a large number of ionic and non-ionic surfactants. Suitable solvent carriers for precleaners include, for example, water, short-chain alcohols, glycol ethers, and the like. Suitable solvent carriers for fluxes include, for example, the above-mentioned precleaner solvents and, additionally, aliphatic and aromatic solvents.

The active materials conventionally used in precleaner compositions include, either singly or in combination, mineral acids and/or salts and/or bases. Suitable precleaner acids include hydrochloric, hydrobromic, hydrofluoric, sulphuric, nitric, and phosphoric acid. Suitable precleaner salts include ammonium chloride, stannous chloride, ammonium persulphate, alkylamine hydrochlorides, zinc chloride, zinc ammonium chloride, and alkanolamine hydrochlorides. Suitable precleaner bases include mono-, di-, and triethanolamine, sodium hydroxide, potassium hydroxide, and ammonium hydroxide. The active materials conventionally used in fluxes include a wide variety of organic and inorganic acids, including halide-containing acids.

Halide-containing precleaners and fluxes are effective in removing oxides and contaminants on metal leads resulting from high temperature processing. The halides in precleaners and fluxes, however, attack the leaded glass frit of integrated circuits and cause corrosion and degradation of the components if the halide migrates into the component through flaws in the surface. As a result, halide-free precleaners and fluxes have been developed to preclean and flux integrated circuit leads in order to avoid the problems created by the halides in conventional precleaners and fluxes.

Halide-free mineral acids, such as nitric acid and sulphuric acid, have often been used in high concentrations in precleaner formulations, but these acids may also lead to component malfunction. Nitric acid and sulphuric acid are known to etch and passivate the commonly used nickel alloy of integrated circuit leads so that the leads cannot thereafter be successfully wetted by solder. Furthermore, nitric acid and sulphuric acid when used in precleaners at conventional high concentrations and temperatures represent a considerable health hazard due to their high degree of corrosivity and, in the case of nitric acid, their evolution of toxic nitrogen oxides.

Halide-free fluxes generally contain organic acids, such as levulenic, citric, tartaric, adipic, and acetic acid, and have been used after precleaners as described above to complete the metal preparation prior to the application of solder to the metal leads. Halide-free flux compositions may also contain organic amines and/or organic salts. Though safer for the components, these preparations generally lack the necessary activity to clean heavily oxidized component leads.

U.S. Patent 3,199,190 describes flux compositions comprising a hydroxyl-containing organic acid, such as hydroxyacetic acid, in conjunction with an alkanolamine, such as monoethanolamine. Alkanolamines, such as monoethanolamine, however, attack leaded glass frits and produce azides which are left as a residue.

U.S. Patent 2,581,820 describes a flux composition containing a combination of an organic acid and a urea in conjunction with conventional wetting agents and solvent carrier. The organic acid is preferably lactic acid and urea is the preferred urea. However this flux leaves a persistent residue which must be subsequently cleaned.

U.S. Patent 3,814,638 describes the use of a chelating agent, such as 8-hydroxyquinoline, which inactivates the metallic ions once they have been removed from the leads during the fluxing operation and prevents those metal ions from causing further oxidation of the metal leads during the fluxing operation.

We have now found a combination of compounds which is capable of providing the active materials of halide-free precleaners which do not attack the electronic components on which they are used, do not constitute a health hazard for personnel using such precleaners, allow for precleaning operations to be carried out at relatively low temperatures, and provide precleaning performance which is comparable to that of precleaners containing halides.

According to the present invention, there is provided a precleaner composition which comprises:

(a) a carboxyl- or carboxylamine-substituted pyridine,

(b) a polyprotic acid,

(c) a surfactant, and

(d) a solvent carrier.

The present invention also comprises a precleaner activator composition for a precleaner composition, which comprises:

(a) a carboxyl- or carboxylamine-substituted pyridine, and

(b) a polyprotic acid.

Preferred carboxyl-substituted pyridines for use as component (a) include, for example, nicotinic acid (niacin), isonicotinic acid, and picolinic acid, of which the first is particularly preferred. Preferred carboxylamine-substituted pyridines include, for example, nicotinamide, isonicotinamide, and picolinamide. The precleaner preferably includes from 0.5 to 30% by weight of component (a).

Preferred polyprotic acids for use as component (b) include, for example, phosphoric acid, sulphuric acid, and mixtures thereof, of which the first is particularly preferred. The amount of polyprotic acid used is preferably from 2.0 to 85% by weight of the precleaner formulation.

The surfactant, component (c), is preferably any of the ionic and non-ionic surfactants which are conventionally used in precleaner compositions. Particularly preferred surfactants include ethoxylated surfactants, such as Triton λ-100 from Kohm and Haas. The precleaner preferably contains from 0.1 to 10% by weight of component (c).

Suitable solvent carriers include, for example, short chain alcohols, glycol ethers, and water. These solvent carriers are conventionally used in precleaner compositions.

Preferred precleaners according to the invention are, for example, as follows. The percentages are by weight.

Example A

| | |
|---|---|
| Phosphoric Acid/Sulphuric Acid | 2.0% to 40.0% |
| Nicotinamide | 0.5% to 10% |
| Ethoxylated Surfactant | 0.2% to 5.0% |
| Water | Quantity sufficient to equal 100% |

Example B

| | |
|---|---|
| Phosphoric/Sulphuric Acid | 2.0% to 40% |
| Picolinic Acid | 0.5% to 10% |
| Ethoxylated Surfactant | 0.2% to 5.0% |
| Water | 0% to 25% |
| Isopropanol | Quantity sufficient to equal 100% |

Example C

| | |
|---|---|
| Phosphoric Acid | 2.0% to 40% |
| Picolinamide | 0.5% to 10% |
| Ethoxylated Surfactant | 0.2% to 5.0% |
| Ethylene Glycol Butyl Ether | 0.0% to 50% |
| Isopropanol/water | Quantity sufficient to equal 100% |

Specific precleaner formulations are illustrated by the following examples.

Example 1

| | |
|---|---|
| Phosphoric Acid | 10% |
| Nicotinic Acid | 2.0% |
| Ethoxylated Surfactant | 0.2% |
| Water | 87.8% |

Example 2

| | |
|---|---|
| Sulphuric Acid | 10% |
| Isonicotinic Acid | 3.0% |
| Monoethanolamine | 2.0% |
| Ethoxylated Surfactant | 0.2% |
| Water | 84.8% |

Example 3

| | |
|---|---|
| Sulphuric Acid | 3.0% |
| Phosphoric Acid | 7.0% |
| Isonicotinic Acid | 3.0% |
| Ethoxylated Surfactant | 0.2% |
| Water | 86.8% |

Precleaners in accordance with any of Examples A to C and 1 to 3 can be used at ambient temperature or at any temperature up to the boiling point of the composition. The application time is typically from 20 to 60 seconds, but can be as short as 5 seconds when the precleaner is heated. This performance is in marked contrast to that of many prior art precleaners which require application at a temperature of nearly 100°C for periods of up to one hour.

Whilst the precleaner of the present invention can be used in any soldering procedure and, in particular, prior to the use of known halide-containing or halide-free fluxers, it is particularly preferred to use it in association with a soldering flux which comprises:

      (i)  an alkylamine,

      (ii) a hydroxyl-containing organic acid or a $C_2$-$C_8$ ketoacid,

      (iii)a surfactant, and

      (iv) a solvent carrier.

This flux is the subject of our Application (GES/14154) of even date herewith.

Because such fluxes and the precleaners of the present invention provide improved performance, the method for preparing and soldering metal parts, in particular the leads of electronic components, can be carried out more efficiently than prior art methods. Specifically, precleaning can be effected at temperatures generally below 150°F (65.5°C) and in most cases can be carried out at ambient temperature; furthermore, the precleaning can be accomplished in times of less than one minute. The precleaners of the present invention are less corrosive than conventional precleaners and do not produce toxic nitrogen oxides so that the need for special handling and precautions is eliminated.

The following procedure is preferred for preparing and soldering the metal parts of electronic components.

First, a precleaner according to the present invention is applied to the circuit component, preferably by dipping. The precleaner is preferably maintained at ambient temperature, but the temperature may be elevated provided that it is below the boiling point of the precleaner.

Second, the component is rinsed with water. The time between dipping and rinsing is generally between 20 and 60 seconds although times as short as 5 seconds are effective where the precleaner is heated.

Third, the component is dried.

Fourth, a flux as described in our said application is applied to the component. Dipping is preferred.

Solder is then applied to the component leads preferably by dipping. The time between dipping in the flux and dipping in the solder need only be several seconds in order for the flux to work. In addition, pre-heating of the leads between flux application and solder application may optionally be used to speed the flux action.

The component is then cooled, rinsed with water, rinsed with de-ionized water, and finally dried.

Claims:

1.       A precleaner composition which comprises:
         (a) a carboxyl- or carboxylamine-substituted
pyridine,
         (b) a polyprotic acid,
         (c) a surfactant, and
         (d) a solvent carrier.

2.       A precleaner composition according to claim 1,
which comprises, by weight, from 0.5 to 30% of component
(a), from 2.0 to 85% by weight of component (b), and from
0.1 to 10% of component (c).

3.       A precleaner activator composition for a precleaner composition, which comprises:
         (a) a carboxyl- or carboxylamine-substituted
pyridine, and
         (b) a polyprotic acid.

4.       A precleaner composition according to claim 1
or 2 or a precleaner activator composition according to
claim 3, in which component (a) is nicotinic acid,
isonicotinic acid, picolinic acid, nicotinamide, isonicotinamide, or picolinamide.

5.       A precleaning composition according to any of
claims 1, 2 and 4 or a precleaner activator composition
according to claims 3 or 4, in which component (b) is
phosphoric acid and/or sulphuric acid.

6.       A method of preparing metal surfaces for
soldering, which comprises:
         (a) applying to the metal surfaces a precleaner
composition according to any of claims 1, 2, 4 and 5 at a temperature below the boiling point of the precleaner composition,

(b) rinsing the precleaner composition from the metal surfaces with water after a time of more than 5 seconds,

(c) drying the metal surfaces, and

(d) applying to the metal surfaces a flux which comprises:

(i)   an alkylamine,

(ii)  a hydroxyl-containing organic acid or a $C_2$-$C_8$ ketoacid,

(iii) a surfactant, and

(iv)  a solvent carrier.